# EUROPÄISCHE PATENTANMELDUNG

(11) **EP 4 847 558 A1**
(43) Veröffentlichungstag der Anmeldung: **02.12.2026**
(21) Anmeldenummer: 25179078.8
(22) Anmeldetag: 27.05.2025
(51) Int. Cl.: C08K 5/12, C08L 27/06, C08K 5/00

(54) **WEICHMACHERZUSAMMENSETZUNG ENTHALTEND 1,4-DIPENTYLCYCLOHEXANDICARBONSÄUREESTER UND EINEN 1,2- ODER 1,4-DIALKYLCYCLOHEXANDICARBONSÄUREESTER**

(71) Anmelder: Evonik Oxeno GmbH & Co. KG, 45772 Marl (DE)
(72) Erfinder: GRASS, Michael, 45721 Haltern am See (DE); VAN EICKELS, Michael, 45657 Recklinghausen (DE); RUSEK, Monika, 45149 Essen (DE)
(74) Vertreter: Evonik Patent Association

(57) **Zusammenfassung**

Die vorliegende Erfindung betrifft eine Weichmacherzusammensetzung enthaltend eine Verbindung der Formel (1) 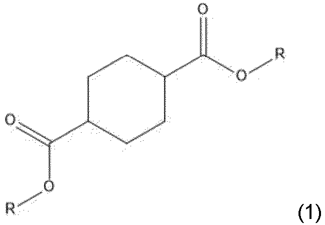 bei denen die beiden Alkylgruppen R jeweils 5 Kohlenstoffatome aufweisen und mindestens einen 1,2- oder 1,4-Dialkylcyclohexandicarbonsäureester, wobei die beiden Alkylgruppen im 1,2- oder 1,4-Dialkylcyclohexandicarbonsäureester jeweils 8, 9 oder 10 Kohlenstoffatome aufweisen.

## Beschreibung

Gegenstand der Erfindung ist eine Weichmacherzusammensetzung enthaltend eine Verbindung der Formel (1) 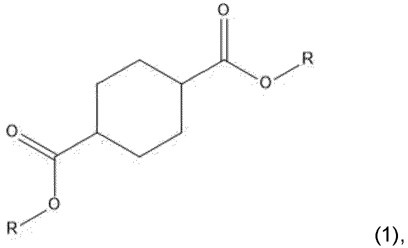 bei denen die beiden Alkylgruppen R jeweils 5 Kohlenstoffatome aufweisen und mindestens einen 1,2- oder 1,4-Dialkylcyclohexandicarbonsäureester, wobei die beiden Alkylgruppen im 1,2- oder 1,4-Dialkylcyclohexandicarbonsäureester jeweils 8, 9 oder 10 Kohlenstoffatome aufweisen.

Dialkylester der 1,2- oder 1,4-Cyclohexandicarbonsäure sind seit einiger Zeit als Weichmacher für Polymere bekannt und auch im Markt etabliert. Relevante Vertreter sind die Diisononylester, die als Ester der 1,2-Cyclohexandicarbonsäure als DINCH (Diisononyl-1,2-cyclohexandicarbonsäureester) und als Ester der 1,4-Cyclohexandicarbonsäure als DINCD (Diisononyl-1,4-cyclohexandicarbonsäureester) zum Beispiel von der Firma Evonik Oxeno GmbH & Co. KG kommerziell erhältlich sind. Die entsprechenden Di-2-ethylhexylester sind ebenfalls bekannt und kommerziell erhältlich.

Die Dialkylester der 1,2- oder 1,4-Cyclohexandicarbonsäure weisen in der Regel gute Viskositätseigenschaften auf, zeigen jedoch Schwächen bei der Weichmachereffizienz und der Gelierung. Insofern wäre es wünschenswert, die Nachteile der Dialkylester der 1,2- oder 1,4-Cyclohexandicarbonsäure zu reduzieren.

Dies wird in der Regel mit schnell gelierenden Weichmachern, kurz "Schnellgelierern" erreicht. Ein Beispiel hierfür ist Dipentylterephthalat, großtechnisch unter dem Markennamen ELATUR^{®} DPT (kurz: DPT) von der Firma Evonik Oxeno GmbH & Co. KG, erhältlich. Dieser Weichmacher und auch Kombinationen mit 1,2- und 1,4-Cyclohexandicarbonsäureestern sind in der EP 3 351 526 A1 offenbart.

Solche Kombinationen werden überwiegend in PVC-Plastisolen zur Herstellung von beispielsweise Fußbodenbelägen, Tapeten, Kunstledern oder auch Unterbodenschutzmassen eingesetzt. Die seitens der Hersteller solcher Artikel immer stärkeren Anforderungen hinsichtlich schnellerer Produktion oder geringerer Verarbeitungstemperatur zur Energieeinsparung machen die Entwicklung noch effizienterer Schnellgelierer erforderlich.

Der vorliegenden Erfindung lag nun die Aufgabe zugrunde, eine Weichmacherzusammensetzung bereitzustellen, die 1,2- oder 1,4-Dialkylcyclohexandicarbonsäureester und einen Schnellgelierer enthält, aber bessere anwendungstechnische Eigenschaften aufweist als entsprechende Weichmacherzusammensetzungen mit Dipentylterephthalat als Schnellgelierer. Idealerweise sollte eine ähnliche Rohstoffbasis genutzt werden können.

Diese Aufgabe wird gelöst durch die Weichmacherzusammensetzung nach Anspruch 1. Gegenstand der Erfindung ist demnach eine Weichmacherzusammensetzung enthaltend eine Verbindung der Formel (1) 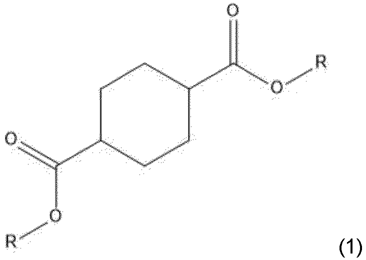 bei denen die beiden Alkylgruppen R jeweils 5 Kohlenstoffatome aufweisen, vorzugsweise jeweils aus einer 2-Methylbutylgruppe und einer n-Pentylgruppe ausgewählt werden, und mindestens einen 1,2- oder 1,4-Dialkylcyclohexandicarbonsäureester, wobei die beiden Alkylgruppen im 1,2- oder 1,4-Dialkylcyclohexandicarbonsäureester jeweils 8, 9 oder 10 Kohlenstoffatome, vorzugsweise 8 oder 9 Kohlenstoffatome aufweisen. Bevorzugte Ausführungsformen der vorliegenden Erfindung sind in den Unteransprüchen angegeben. Die Reste R sind folglich Pentylreste.

Es wurde gefunden, dass Verbindungen der Formel (1) in einer Mischung mit 1,2- oder 1,4-Dialkylcyclohexandicarbonsäureestern deutlich verbesserte Geliergeschwindigkeiten aber auch niedrigere Viskositäten des entsprechenden Plastisols und eine verbesserte weichmachende Wirkung als beispielsweise das chemisch ähnliche ELATUR^{®} DPT ermöglichen.

Im Rahmen der vorliegenden Erfindung werden die Begriffe "pentyl", "Pentylreste" oder ähnliches verwendet. Damit wird unterstrichen, dass die erfindungsgemäßen Ester verschiedene Pentyl-Isomere, insbesondere 2-Methylbutyl und/oder 3-Methylbutyl und/oder n-Pentyl, enthalten.

Die erfindungsgemäße Zusammensetzung umfasst 1,4-Dipentylcyclohexandicarbonsäureester. Die Pentylreste können aus jedem Pentyl-Isomer ausgewählt sein, werden bevorzugt aber aus der Gruppe, bestehend aus n-Pentyl, 2-Methylbutyl und 3-Methylbutyl, besonders bevorzugt aus n-Pentyl und 2-Methylbutyl ausgewählt. Davon umfasst sind die isomerenreinen Ester 1,4-Di-n-pentylcyclohexandicarbonsäureester, 1,4-Di-2-methylbutyl-cyclohexandicarbonsäureester und 1,4-Di-3-methylbutyl-cyclohexandicarbonsäureester.

In einer bevorzugten Ausführungsform enthält die erfindungsgemäße Zusammensetzung Mischester der 1,4-Dipentylcyclohexandicarbonsäureester. Das bedeutet, dass die Pentylreste des 1,4-Dipentylcyclohexandicarbonsäureesters mindestens zwei Pentylreste aus der Gruppe, bestehend aus n-Pentyl, 2-Methylbutyl und 3-Methylbutyl enthalten. Möglich ist auch, dass der 1,4-Dipentylcyclohexandicarbonsäureester alle drei Reste n-Pentyl, 2-Methylbutyl und 3-Methylbutyl enthält.

Die erfindungsgemäße Zusammensetzung umfasst besonders bevorzugt Mischester der 1,4-Dipentylcyclohexandicarbonsäureester, wobei mindestens 40% der Pentylreste, vorzugsweise mindestens 50 % der Pentylreste, besonders bevorzugt mindestens 90% der Pentylreste im Mischester n-Pentylreste sind. Mischester bedeutet in diesem Zusammenhang auch, dass nicht 100% aller Pentylreste n-Pentylreste sind. Die Prozentangabe bezieht sich dabei auf die Gesamtmenge an Pentylresten im Mischester.

Die Summe aller vorhandenen Pentylreste im Mischester ergibt naturgemäß 100 %. Die restlichen Pentylreste verteilen sich dann notwendigerweise auf 2-Methylbutyl- und/oder 3-Methylbutylreste. Es ist bevorzugt, den Anteil an 3-Methylbutylresten gering zu halten. Vorzugsweise sind in den 1,4-Dipentylcyclohexandicarbonsäureestern weniger als 10 %, vorzugsweise weniger als 5% der Pentylreste 3-Methylbutylreste. In einer besonders bevorzugten Ausführungsform enthält der 1,4-Dipentylcyclohexandicarbonsäureester kleiner 0,1 % oder keine 3-Methylbutylreste. Die Prozentangabe bezieht sich hierbei auf die Gesamtmenge an Pentylresten im Mischester.

Im Gegensatz dazu hat es sich als vorteilhaft erwiesen, wenn der 1,4-Dipentylcyclohexandicarbonsäureester 2-Methylbutylreste enthält. Bevorzugt sind in den 1,4-Dipentylcyclohexandicarbonsäureestern bis zu 60 % der Pentylreste 2-Methylbutylreste, weiterhin bevorzugt bis zu 50% der Pentylreste 2-Methylbutylreste und besonders bevorzugt sind in den 1,4-Dipentylcyclohexandicarbonsäureestern 1 bis 10 % der Pentylreste 2-Methylbutylreste. Die Prozentangabe bezieht sich hierbei auf die Gesamtmenge an Pentylresten im Mischester.

Die beiden Pentylestergruppen der erfindungsgemäßen 1,4-Cyclohexandicarbonsäureester können sich auf unterschiedlichen oder gleichen Seiten der Molekülebene befinden (cis/trans-Isomerie). Es ist erfindungsgemäß bevorzugt, wenn die Dipentylester der 1,4-Cyclohexandicarbonsäure nach der Formel (1) einen cis-Gehalt von 60 bis 90 %, vorzugsweise 70 bis 85 % aufweisen. Der cis-Gehalt kann recht einfach mittels ¹H-NMR-Spektroskopie oder Gaschromatographie bestimmt werden. Es sei hierbei erwähnt, dass sich die Summe aus cis- und trans-Gehalt jeweils zu 100 % ergibt.

1,4-Dipentylcyclohexandicarbonsäureester gemäß Formel (1) können beispielsweise durch Veresterung der 1,4-Cyclohexandicarbonsäure mit einem Pentanol hergestellt werden. Der erhaltene 1,4-Dipentylcyclohexandicarbonsäureester wird dann weitgehend die Isomerenverteilung aufweisen, wie sie im Pentanol vorhanden ist. Zur gezielten Einstellung der Isomerenverteilung, beispielsweise die Einstellung eines höheren Anteils an n-Pentanol, kann eine Destillation einer technischen Mischung aus n-Pentanol/2-Methylbutanol durchgeführt werden. Ein weiterer Weg zur Herstellung von 1,4-Dipentylcyclohexandicarbonsäureester ist die Kernhydrierung von DPT (Dipentylterephthalat), beispielsweise dem ELATUR^{®} DPT von der Firma Evonik Oxeno GmbH & Co. KG.

Neben den 1,4-Dipentylcyclohexandicarbonsäureestern enthält die erfindungsgemäße Weichmacherzusammensetzung 1,2- oder 1,4-Dialkylcyclohexandicarbonsäureester, wobei die beiden Alkylgruppen jeweils unabhängig voneinander 8, 9 oder 10 Kohlenstoffatome, vorzugsweise 8 oder 9 Kohlenstoffatome aufweisen.

Die entsprechenden 1,4-Dialkylcyclohexandicarbonsäureester können durch die nachfolgende Markush-Formel beschrieben werden: 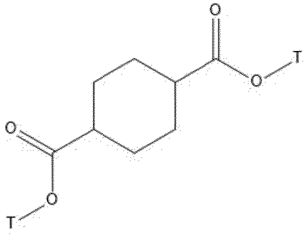 wobei die beiden Reste T jeweils unabhängig voneinander Alkylgruppen mit 8, 9 oder 10 Kohlenstoffatomen, vorzugsweise 8 oder 9 Kohlenstoffatomen sind.

Die beiden Alkylgruppen können dabei jeweils unabhängig voneinander aus der Gruppe, bestehend aus einer normalen Octylgruppe, einer Isooctylgruppe, einer 2-Ethylhexylgruppe, einer normalen Nonylgruppe, einer Isononylgruppe, einer n-Decylgruppe, einer Isodecylgruppe oder einer 2-Propylheptylgruppe, vorzugsweise aus der Gruppe, bestehend aus einer normalen Octylgruppe, einer Isooctylgruppe, einer 2-Ethylhexylgruppe, einer normalen Nonylgruppe und einer Isononylgruppe ausgewählt werden. Unter einer Isooctylgruppe wird im Sinne der vorliegenden Erfindung eine Mischung aus linearen und verzweigten primären C8-Akylgruppen verstanden. Analog versteht man unter einer Isononylgruppe bzw. einer Isodecylgruppe jeweils eine Mischung aus linearen und verzweigten C9-Alkylgruppen bzw. C10-Alkylgruppen.

In einer bevorzugten Ausführungsform der vorliegenden Erfindung weisen die beiden Alkylgruppen des 1,4-Dialkylcyclohexandicarbonsäureesters jeweils die gleiche Anzahl an Kohlenstoffatomen auf. Das bedeutet, dass beide Alkylgruppen 8, dass beide Alkylgruppen 9 Kohlenstoffatome oder dass beide Alkylgruppen 10 Kohlenstoffatome aufweisen, aber nicht, dass beide Alkylgruppen hinsichtlich der jeweiligen Isomere immer identisch sein müssen.

Es ist jedoch besonders bevorzugt, dass der 1,4-Dialkylcyclohexandicarbonsäureester in der erfindungsgemäßen Zusammensetzung 1,4-Di-isononyl-cyclohexandicarbonsäureester (1,4-DINCH bzw. DINCD) oder 1,4-Di-2-ethylhexyl-cyclohexandicarbonsäureester (1,4-DEHCH) ist.

Die beiden Alkylgruppen der 1,4-Dialkylcyclohexandicarbonsäureester können sich auf unterschiedlichen oder gleichen Seiten der Molekülebene befinden (cis/trans-Isomerie). Es ist erfindungsgemäß bevorzugt, wenn die 1,4-Dialkylcyclohexandicarbonsäureester einen cis-Gehalt von 60 bis 90 %, vorzugsweise 70 bis 85 % aufweisen. Der cis-Gehalt kann recht einfach mittels ¹H-NMR-Spektroskopie oder Gaschromatographie bestimmt werden. Es sei hierbei erwähnt, dass sich die Summe aus cis- und trans-Gehalt jeweils zu 100 % ergibt.

Die Herstellung der erfindungsgemäßen 1,4-Dialkylcyclohexandicarbonsäureester kann über direkte Veresterung der 1,4-Cyclohexandicarbonsäure mit einem Alkohol mit 8, 9 oder 10 Kohlenstoffatomen, vorzugsweise 8 oder 9 Kohlenstoffatomen erfolgen. Der Alkohol wird dabei vorzugsweise im Überschuss eingesetzt, d. h. in einer Menge von mehr als 2 Mol pro Mol Säurekomponente. Die direkte Veresterung wird weiterhin bevorzugt an einem sauren Katalysator durchgeführt, beispielsweise anorganische, organische oder Lewis-Säuren. Entsprechende Verfahren sind dem Fachmann bekannt.

Die Herstellung der erfindungsgemäßen 1,4-Dialkylcyclohexandicarbonsäureester kann auch über eine Umesterung erfolgen, wobei ein 1,4-Dialkylcyclohexandicarbonsäureester mit Alkylgruppen mit weniger als 8 Kohlenstoffatomen eingesetzt und mit einem Alkohol mit 8, 9 oder 10 Kohlenstoffatomen, vorzugsweise mit 8 oder 9 Kohlenstoffatomen umgeestert wird. Auch hier kann der Alkohol mit 8, 9 oder 10 Kohlenstoffatomen, vorzugsweise mit 8 oder 9 Kohlenstoffatomen im Überschuss eingesetzt werden. Auch die Umesterung ist ein dem Fachmann bekanntes Verfahren.

Vorzugsweise erfolgt die Herstellung aber über die Veresterung von Terephthalsäure mit einem Alkohol mit 8, 9 oder 10 Kohlenstoffatomen, vorzugsweise mit 8 oder 9 Kohlenstoffatomen oder durch Umesterung eines Terephthalsäureesters, dessen Alkylgruppe weniger als 8 Kohlenstoffatome aufweist, vorzugsweise Dimethylterephthalat. Es entstehen dabei Dialkylterephthalsäureester, deren Alkylgruppen 8, 9 oder 10 Kohlenstoffatome, vorzugsweise 8 oder 9 Kohlenstoffatome aufweisen. Anschließend werden die so hergestellten Dialkylterephthalsäureester kernhydriert, um die gewünschten 1,4-Dialkylcyclohexandicarbonsäureester zu erhalten. Verfahren zur Kernhydrierung sind in der Literatur beschrieben und dem Fachmann bekannt.

Die entsprechenden 1,2-Dialkylcyclohexandicarbonsäureester können durch die nachfolgende Markush-Formel beschrieben werden: 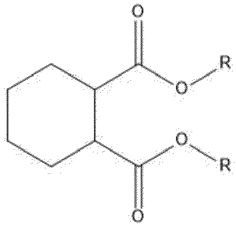 wobei die beiden Reste R jeweils unabhängig voneinander Alkylgruppen mit 8, 9 oder 10 Kohlenstoffatomen, vorzugsweise mit 8 oder 9 Kohlenstoffatomen sind.

Die beiden Alkylgruppen können dabei jeweils unabhängig voneinander aus der Gruppe, bestehend aus einer normalen Octylgruppe, einer Isooctylgruppe, einer 2-Ethylhexylgruppe, einer normalen Nonylgruppe, einer Isononylgruppe, einer n-Decylgruppe, einer Isodecylgruppe oder einer 2-Propylheptylgruppe, vorzugsweise aus der Gruppe, bestehend aus einer normalen Octylgruppe, einer Isooctylgruppe, einer 2-Ethylhexylgruppe, einer normalen Nonylgruppe und einer Isononylgruppe ausgewählt werden. Unter einer Isooctylgruppe wird im Sinne der vorliegenden Erfindung eine Mischung aus linearen und verzweigten primären C8-Alkylgruppen verstanden. Analog versteht man unter einer Isononylgruppe bzw. einer Isodecylgruppe jeweils eine Mischung aus primären linearen und verzweigten C9-Alkylgruppen bzw. C10-Alkylgruppen.

In einer bevorzugten Ausführungsform der vorliegenden Erfindung weisen die beiden Alkylgruppen des 1,2-Dialkylcyclohexandicarbonsäureesters jeweils die gleiche Anzahl an Kohlenstoffatomen auf. Das bedeutet, dass beide Alkylgruppen 8, beide Alkylgruppen 9 oder beide Alkylgruppen 10 Kohlenstoffatome aufweisen, aber nicht, dass beide Alkylgruppen hinsichtlich der jeweiligen Isomere immer identisch sein müssen.

Es ist jedoch besonders bevorzugt, dass der 1,2-Dialkylcyclohexandicarbonsäureester in der erfindungsgemäßen Zusammensetzung 1,2-Di-isononyl-cyclohexandicarbonsäureester (DINCH) oder 1,2-Di-2-ethylhexyl-cyclohexandicarbonsäureester (DEHCH) ist.

Die beiden Alkylgruppen der 1,2-Dialkylcyclohexandicarbonsäureester können sich auf unterschiedlichen oder gleichen Seiten der Molekülebene befinden (cis/trans-Isomerie). Es ist erfindungsgemäß bevorzugt, wenn die 1,2-Dialkylcyclohexandicarbonsäureester nach der Formel (1) einen cis-Gehalt von 60 bis 97 %, vorzugsweise 80 bis 95 % aufweisen. Der cis-Gehalt kann recht einfach mittels ¹H-NMR-Spektroskopie oder Gaschromatographie bestimmt werden. Es sei hierbei erwähnt, dass sich die Summe aus cis- und trans-Gehalt jeweils zu 100 % ergibt.

Die Herstellung der erfindungsgemäßen 1,2-Dialkylcyclohexandicarbonsäureester kann über direkte Veresterung der 1,2-Cyclohexandicarbonsäure oder des entsprechenden Anhydrids mit einem Alkohol mit 8, 9 oder 10 Kohlenstoffatomen, vorzugsweise mit 8 oder 9 Kohlenstoffatomen erfolgen. Der Alkohol wird dabei vorzugsweise im Überschuss eingesetzt, d. h. in einer Menge von mehr als 2 Mol pro Mol Säurekomponente. Die direkte Veresterung wird weiterhin bevorzugt an einem sauren Katalysator durchgeführt, beispielsweise anorganische, organische oder Lewis-Säuren. Alternativ können die erfindungsgemäßen 1,2-Dialkylcyclohexandicarbonsäureester auch über eine Reaktionssequenz, die eine Diels-Alder-Reaktion aus Butadien und Maleinsäureanhydrid einschließt, hergestellt werden. Das so entstehende sog. Tetrahydrophthalsäureanhydrid wird anschließend mit Alkoholen verestert und die Doppelbindung hydriert. Entsprechende Verfahren sind dem Fachmann bekannt.

Die Herstellung der erfindungsgemäßen 1,2-Dialkylcyclohexandicarbonsäureester kann auch über eine Umesterung erfolgen, wobei ein 1,2-Dialkylcyclohexandicarbonsäureester mit Alkylgruppen mit weniger als 8 Kohlenstoffatomen eingesetzt und mit einem Alkohol mit 8, 9 oder 10 Kohlenstoffatomen, vorzugsweise mit 8 oder 9 Kohlenstoffatomen umgeestert wird. Auch hier kann der Alkohol mit 8, 9 oder 10 Kohlenstoffatomen, vorzugsweise mit 8 oder 9 Kohlenstoffatomen im Überschuss eingesetzt werden. Entsprechende Verfahren sind dem Fachmann ebenfalls bekannt.

Vorzugsweise erfolgt die Herstellung aber über die Veresterung von Phthalsäure, besonders bevorzugt mit Phthalsäureanhydrid mit einem Alkohol mit 8, 9 oder 10 Kohlenstoffatomen, vorzugsweise mit 8 oder 9 Kohlenstoffatomen oder durch Umesterung eines Phthalsäureesters, dessen Alkylgruppe weniger als 8 Kohlenstoffatome aufweist. Es entstehen dabei Dialkylphthalsäureester, deren Alkylgruppen 8, 9 oder 10 Kohlenstoffatome, vorzugsweise 8 oder 9 Kohlenstoffatome aufweisen. Anschließend werden die so hergestellten Dialkylphthalsäureester kernhydriert, um die gewünschten 1,2-Dialkylcyclohexandicarbonsäureester zu erhalten. Verfahren zur Kernhydrierung sind in der Literatur beschrieben und dem Fachmann bekannt.

Die beiden Substanzen können in unterschiedlichen Mengen in der erfindungsgemäßen Weichmacherzusammensetzung vorhanden sein. Es sollte klar sein, dass die beiden Substanzen in einer Menge vorhanden sein müssen, bei der sie eine Wirkung entfalten, d. h. wo eine weichmachende Wirkung eintritt. In einer bevorzugten Ausführungsform der vorliegenden Erfindung liegen die Verbindung nach Formel (1) und der 1,2- oder 1,4-Dialkylcyclohexandicarbonsäureester in einem Gewichtsverhältnis (Verbindung nach Formel (1) : 1,2- oder 1,4-Dialkylcyclohexandicarbonsäureester) von 1 : 99 bis 99 : 1, vorzugsweise 10 : 90 bis 90 : 10, besonders bevorzugt 30 : 70 bis 70 : 30 in der Weichmacherzusammensetzung vor. In einer ganz besonders bevorzugten Ausführung der vorliegenden Erfindung liegen die Verbindung nach Formel (1) und der 1,2- oder 1,4-Dialkylcyclohexandicarbonsäureester in einem Gewichtsverhältnis (Verbindung nach Formel (1) : 1,2- oder 1,4-Dialkylcyclohexandicarbonsäureester) von 40 : 60 bis 5 : 95 in der Weichmacherzusammensetzung vor.

Die erfindungsgemäße Weichmacherzusammensetzung der vorliegenden Erfindung kann zusätzlich ein epoxidiertes Öl oder einen epoxidierten Alkylester einer Fettsäure enthalten. Epoxidierte Öle oder entsprechende Ester können die thermische Stabilität und die mechanischen Eigenschaften verbessern und je nach ihrem Anteil auch weichmachende Eigenschaften aufweisen.

Das epoxidierte Öl kann aus der Gruppe bestehend aus epoxidiertem Sojabohnenöl, epoxidiertem Rizinusöl, epoxidiertem Leinöl, epoxidiertem Palmöl, epoxidiertem Tallöl und Mischungen davon ausgewählt werden. Bevorzugt werden epoxidiertes Sojabohnenöl oder epoxidiertes Leinöl in der erfindungsgemäßen Weichmacherzusammensetzung eingesetzt. Besonders bevorzugt ist epoxidiertes Sojabohnenöl, das auch unter dem Akronym ESBO bekannt ist.

Die epoxidierten Fettsäureester können durch Umesterung der o.g. epoxidierten Öle mit Alkoholen im Bereich von 1 bis 10 Kohlenstoffatomen, bevorzugt 4 bis 9 Kohlenstoffatomen, hergestellt werden.

Alternativ kann erst das natürliche Öl umgeestert und die Doppelbindungen der Fettsäure anschließend epoxidiert werden.

Das epoxidierte Öl oder die entsprechenden epoxidierten Fettsäurealkylester können in einer Menge von 1 bis 150 Gewichtsteilen bezogen auf 100 Gewichtsteile der Gesamtsumme aus der Verbindung gemäß Formel (1) und dem 1,2- oder 1,4-Dialkylcyclohexandicarbonsäureester eingesetzt werden. Das epoxidierte Öl oder die epoxidierten Fettsäureester können auch in Mengen von 2 bis 125 Gewichtsteilen, 5 bis 100 Gewichtsteilen, 10 bis 80 Gewichtsteilen oder 20 bis 70 Gewichtsteilen jeweils bezogen auf 100 Gewichtsteile der Gesamtsumme aus der Verbindung gemäß Formel (1) und dem 1,2-oder 1,4-Dialkylcyclohexandicarbonsäureester in der Weichmacherzusammensetzung enthalten sein.

Die erfindungsgemäße Weichmacherzusammensetzung kann zusätzlich noch mindestens einen weiteren Weichmacher enthalten, der aus der Gruppe, bestehend aus Adipaten, Benzoaten, beispielsweise Monobenzoaten oder Glycoldibenzoaten, chlorierten Kohlenwasserstoffen (sog. Chlorparaffinen), Citraten, epoxidierten Fettsäureestern, epoxidierten Pflanzenölen, epoxidierten acylierten Glyceriden, Isosorbidestern, Furandicarboxylaten, Phosphaten, Succinaten, Sulfonamiden, Alkylsulfonsäureestern des Phenols, Phthalaten, Terephthalaten, Isophthalaten, Cyclohexandicarboxylaten mit Ausnahme der bereits vorhandenen Ester, Trimellitaten sowie Polyolestern und oligomeren oder polymeren Estern auf Basis von Adipin-, Bernstein- oder Sebacinsäure, ausgewählt wird.

In einer bevorzugten Ausführungsform der vorliegenden Erfindung enthält die Weichmacherzusammensetzung mindestens einen weiteren Weichmacher, der aus der Gruppe, bestehend aus Alkylbenzoaten, Alkylsulfonsäureestern des Phenols, Dialkyladipaten, Glycerinestern, C4-bis C6- Alkansäureestern von Polyolen, acetylierten oder nicht acetylierten Citronensäuretrialkylestern, Glykoldibenzoaten, Trialkylestern der Trimellitsäure, Dialkylterephthalaten, Dialkylphthalaten, Dialkylisophthalaten, Estern der Furandicarbonsäure, Dialkanoylestern von Dianhydrohexitolen (z.B. Isosorbid), epoxidierten Fettsäurealkylestern, Polymerweichmachern, beispielsweise der Polyadipate sowie den Dialkylestern der 1,3-Cyclohexandicarbonsäure und Dialkylestern der 1,2- und 1,4-Cyclohexandicarbonsäure mit Ausnahme der bereits vorhandenen Ester, ausgewählt wird.

In einer weiterhin bevorzugten Ausführungsform wird der mindestens eine weitere Weichmacher, der in der erfindungsgemäßen Weichmacherzusammensetzung enthalten sein kann, aus der Gruppe, bestehend aus C8- bis C13-Alkylbenzoaten, C4- bis C10-Dialkyladipaten, Pentaerythrit-tetravalerat, acetylierten oder nicht acetylierten Citronensäuretrialkylestern mit C4 bis C9-Alkylgruppen, C4- bis C10-Trialkyltrimellitaten, C4- bis C9-Dialkylterephthalaten, C4- bis C13-Dialkylphthalaten, insbesondere C9-bis C13-Dialkylphthalaten und C4- bis C10-Dialkylestern der 1,3-Cyclohexandicarbonsäure, sowie den C4-C7-Dialkylestern der 1,2- oder 1,4-Cyclohexandicarbonsäure mit Ausnahme des bereits vorhandenen Dipentylesters der 1,4-Cyclohexandicarbonsäure ausgewählt.

Besonders bevorzugt werden von den Citraten Butyl- oder Pentyl- oder höhere Citrate eingesetzt, die eine Acetylgruppe aufweisen können. Darunter fallen Tributylcitrat, Tripentylcitrat, Tri-n-hexylcitrat, Tri-2-ethylhexylcitrat, Triisononylcitrat, Acetyltributylcitrat und Acetyltripentylcitrat. Außerdem können auch Citrate mit unterschiedlichen Alkylketten wie z.B. Butyl/2-Ethylhexyl oder Pentyl/Nonyl bevorzugt eingesetzt werden. Von den C4- bis C10-Dialkyladipaten sind Diethylhexyladipat (DEHA) und Diisononyladipat (DINA) bevorzugt. Von den C4- bis C9-Dialkylterephthalaten sind Dibutylterephthalat (DBT), Dipentylterephthalat (DPT) und Diethylhexylterephthalat (DEHT bzw. DOTP) bevorzugt. Von den C4- bis C10-Trialkyltrimellitaten sind Triethylhexyltrimellitat (TEHTM bzw. TOTM), und Triisononyltrimellitat (TINTM) sowie Trimellitsäureester von linearen C8 und C10-Alkoholen (T810TM) bevorzugt.

Ein weiterer Gegenstand der vorliegenden Erfindung ist eine Kunststoffzusammensetzung, die einen Kunststoff und die Weichmacherzusammensetzung, umfassend die Verbindung der Formel (1) und mindestens einen 1,2- oder 1,4-Dialkylcyclohexandicarbonsäureester, wobei die beiden Alkylgruppen jeweils 8, 9 oder 10 Kohlenstoffatome, vorzugsweise jeweils 8 oder 9 Kohlenstoffatome aufweisen, enthält. Die Kunststoffzusammensetzung kann zudem das epoxidierte Öl und /oder ein epoxidierten Fettsäurealkylester und/oder mindestens einen zusätzlichen Weichmacher aus der oben genannten Liste enthalten.

Geeignete Kunststoffe sind polymere Substanzen, die vorzugsweise aus der Gruppe, bestehend aus PVC (Polyvinylchlorid), Homo- oder Copolymere auf Basis von Ethylen, Propylen, Butadien, Vinylacetat, Glycidylacrylat, Glycidylmethacrylat, Ethylacrylat, Butylacrylat oder Methacrylat mit Alkoxyresten von verzweigten oder unverzweigten Alkoholen mit einem bis zehn Kohlenstoffatom(en), Acrylnitril oder cyclischen Olefinen, Polyvinylidenchlorid (PVDC), Polyacrylaten, insbesondere Polymethylmethacrylat (PMMA), Polyalkylmethacrylat (PAMA), Polyharnstoffe, silylierte Polymere, Fluorpolymere, insbesondere Polyvinylidenfluorid (PVDF), Polytetrafluorethylen (PTFE), Polyvinylacetat (PVAc), Polyvinylalkohol (PVA), Polyvinylacetale, insbesondere Polyvinylbutyral (PVB), Polystyrolpolymere, insbesondere Polystyrol (PS), expandierbares Polystyrol (EPS), Acrylonitril-Styrol-Acrylat (ASA), Styrolacrylonitril (SAN), Acrylonitril-Butadien-Styrol (ABS), Styrol-Maleinsäureanhydrid-Copolymer (SMA), Styrol-Methacrylsäure-Copolymer, Polyolefine, insbesondere Polyethylen (PE) oder Polypropylen (PP), thermoplastische Polyolefine (TPO), Polyethylen-Vinylacetat (EVA), Polycarbonate, Polyethylenterephthalat (PET), Polybutylenterephthalat (PBT), Polyoxymethylen (POM), Polyamid (PA), Polyethylenglykol (PEG), Polyurethan (PU), Thermoplastisches Polyurethan (TPU), Polysulfide (PSu), Biopolymere, insbesondere Polymilchsäure (PLA), Polyhydroxybutyral (PHB), Polyhydroxyvaleriansäure (PHV), Polyester, Stärke, Cellulose und Cellulose-Derivate, insbesondere Nitrocellulose (NC), Ethylcellulose (EC), Celluloseacetat (CA), Cellulose-Acetat/Butyrat (CAB), Gummi und Silikonen, ausgewählt werden.

In einer bevorzugten Ausführungsform ist der Kunststoff ein Polymer, ausgewählt aus der Gruppe bestehend aus Polyvinylchlorid (PVC), Polyalkylmethacrylat (PAMA), Polyvinylbutyral (PVB), Polyurethan, Polysulfide, Polymilchsäure (PLA), Polyhydroxybutyral (PHB), Nitrocellulose und Co-Polymeren von Vinylchlorid mit Vinylacetat oder mit Butylacrylat. Besonders bevorzugt ist hiervon PVC als Kunststoff in der erfindungsgemäßen Kunststoffzusammensetzung.

Die Menge der erfindungsgemäßen Weichmacherzusammensetzung in der Kunststoffzusammensetzung beträgt vorzugsweise 5 bis 150 Gewichtsteile, bevorzugt 10 bis 120 Gewichtsteile, besonders bevorzugt 15 bis 110 Gewichtsteile und ganz besonders bevorzugt 20 bis 100 Gewichtsteile pro 100 Gewichtsteile des Kunststoffs.

Die Kunststoffzusammensetzung kann neben den erwähnten Inhaltsstoffen zusätzliche Additive enthalten. Beispiele für zusätzliche Additive sind rheologische Additive, mit denen die Viskosität der Kunststoffzusammensetzung verringert werden kann. Beispiele für bekannte rheologische Additive sind die unter den Handelsnamen VISCOBYK^{®}-5120, VISCOBYK^{®}-5130 und VISCOBYK^{®}-4041 erhältlichen Produkte. Die Additive können in einem Anteil von 1 bis 12, bevorzugt 2 bis 10 Gewichtsteilen pro 100 Gewichtsteilen PVC in der Kunststoffzusammensetzung enthalten sein.

Darüber hinaus kann die Kunststoffzusammensetzung einen oder mehrere Thermostabilisator(en) enthalten. Geeignete Thermostabilisatoren sind Bleisalze, Organozinnverbindungen, Barium/Zinkverbindungen, Cadmiumverbindungen oder Zinkverbindungen, Calcium/Zink-Stabilisatoren und organisch-basierte Stabilisatoren (sog. OBS). Bevorzugte Thermostabilisatoren sind Barium/Zinkverbindungen, Calcium/Zink-Stabilisatoren und organisch-basierte Stabilisatoren (sog. OBS). Der Anteil des oder der Stabilisatoren in der Kunststoffzusammensetzung beträgt vorzugsweise 1 bis 6 Gewichtsteile pro 100 Gewichtsteilen PVC.

Als weitere Additive können darüber hinaus auch Füllstoffe, Pigmente, Treibmittel, UV-Stabilisatoren und Gleitmittel in der Kunststoffzusammensetzung enthalten sein.

Die erfindungsgemäße Kunststoffzusammensetzung ist vorzugsweise Bestandteil eines Klebstoffs, einer Dichtungsmasse, einer Beschichtungsmasse, eines Lacks, einer Farbe, eines Plastisols, eines Dryblends, eines Schaums, eines Kunstleders, eines Fußbodenbelags, insbesondere dessen Deck- oder Schaumschicht, einer Dachbahn, eines Unterbodenschutzes, einer Gewebebeschichtung, eines Kabels, einer Drahtisolierung, eines Schlauchs, eines Extrusionsartikels, einer Folie, eines Gegenstands im Automobilinnenbereich, einer Tapete, einer Tinte, eines Spielzeugs, einer Kontaktfolie, einer Lebensmittelverpackung oder eines medizinischen Artikels, insbesondere eines Schlauchs oder eines Blutbeutels.

Gegenstand der vorliegenden Erfindung ist deshalb auch die Verwendung der Kunststoffzusammensetzung in Klebstoffen, Dichtungsmassen, Beschichtungsmassen, Lacken, Farben, Plastisolen, Schäumen, Kunstleder, Fußbodenbelägen, insbesondere Deck- und Schaumschicht, Dachbahnen, Unterbodenschutz, Gewebebeschichtungen, Kabeln, Drahtisolierungen, Schläuchen, Extrusionsartikeln, Folien, im Automobilinnenbereich, in Tapeten, Tinten, Spielzeug, Kontaktfolien, Lebensmittelverpackungen oder medizinischen Artikeln, insbesondere in Schläuchen oder Blutbeuteln.

Die vorliegende Erfindung wird nachfolgend anhand von Beispielen illustriert. Die folgenden Beispiele sollen die Erfindung erläutern, ohne deren Anwendungsbreite, die sich aus der Beschreibung und den Patentansprüchen ergibt, einzuschränken.

### Beispiel 1 - Herstellung der 1,4-Dipentylcyclohexandicarbonsäureester

Zunächst wurden die entsprechenden Mischungen aus n-Pentanol/2-Methylbutanol und 1,4-Cyclohexandicarbonsäure (siehe Tabelle 1) inklusive eines 25% molaren Alkoholüberschusses in Bezug auf die Menge an eingesetzter Cyclohexan-1,4-dicarbonsäure in einer Veresterungsapparatur vorgelegt. Vor der Zugabe des Katalysators Tetra(n-butyl)titanat (TNBT) (Menge Katalysator: 0,1 mol % bezogen auf Cyclohexan-1,4-dicarbonsäure) wurde die gesamte Apparatur mit Stickstoff gespült. Danach wurde die Reaktion durch Aufheizen gestartet. Die Reaktionstemperatur betrug dabei 130 bis 240°C, d. h. sie stieg während der Reaktion an. Entstehendes Reaktionswasser wurde über einen Wasserauskreiser aus dem System entfernt, sodass das Gleichgewicht in Richtung Ester bzw. Vollumsatz verschoben werden konnte.

Sobald kein Wasseranfall mehr zu beobachten war, wurde eine Probe gezogen und die Säurezahl bestimmt. Als die Säurezahl < 0,5 mg KOH pro g Probe erreichte, wurde die Reaktion beendet.

Im nächsten Schritt wurde der überschüssige Alkohol bei 160 °C unter Vakuum abdestilliert. Anschließend wurde die Säurezahl der Reaktionsmischung bestimmt und diese dann durch die Zugabe der 3-fachen stöchiometrischen Menge an 10%-NaOH neutralisiert. Restmengen an Alkohol wurden im nächsten Schritt durch eine Wasserdampfdestillation bei 160 °C unter Vakuum entfernt. Danach wurde der Ansatz bei 130°C unter Vakuum getrocknet, bis der Wassergehalt < 0,05 % war. Im letzten Schritt wurde das Produkt über einen 0,5 mm PTFE-Filter und Perlite als Filterhilfsmittel klar filtriert und mittels GC analysiert.

**Tabelle 1: Übersicht über das eingesetzte Verhältnis der C5-Alkohole bei der Herstellung der Ester**

| **Bezeichnung Ester** | **Mol % n-Pentanol** | **Mol-% 2-Methylbutanol** | **Mol-% 3-Methylbutanol** |
|---|---|---|---|
| Pe-DPCD | 100 | 0 | 0 |
| 2MbPe-DPCD (7:93) | 93 | 7 | 0 |
| 2MbPe-DPCD (50:50) | 50 | 50 | 0 |
| 3Mb-DPCD | 0 | 0 | 100 |
| 2Mb-DPCD | 0 | 100 | 0 |

### Beispiel 2 - Herstellung von Plastisolen

Es wurden PVC-Plastisole hergestellt, wie sie beispielsweise zur Fertigung von Deckstrichfilmen für Fußbodenbeläge verwendet werden. Die Angaben in der Plastisolrezeptur sind jeweils in Gewichtsteilen (phr). Die Rezepturen der Polymerzusammensetzung sind in Tabelle 2 bis 7 aufgelistet.

**Tabelle 2: Übersicht über die hergestellten Plastisole mit DINCH im Verhältnis 3:1.**

| Plastisol | 1 | 2* | 3* | 4* | 5* | 6* |
|---|---|---|---|---|---|---|
| | phr | phr | phr | phr | phr | phr |
| PVC (Vestolit^{®} P 1430 K 70 Ultra; Fa. Vestolit) | 100 | 100 | 100 | 100 | 100 | 100 |
| ELATUR^{®} CH, (Di-isononyl-1,2-cyclohexanoat, Fa. Evonik Oxeno & Co. KG) | 37,5 | 37,5 | 37,5 | 37,5 | 37,5 | 37,5 |
| ELATUR^{®} DPT, (Diisopentylterephthalat, Fa. Evonik Oxeno & Co. KG) | 12,5 | | | | | |
| Pe-DPCD (n-Pentyl, DPCD: Di-isopentyl-1,4-cyclohexanoat) | | 12,5 | | | | |
| 2MbPe-DPCD (7:93) (2Mb: 2-Methylbutyl (7%), n-Pentyl (93 %)) | | | 12,5 | | | |
| 2MbPe-DPCD (50:50) (2Mb: 2-Methylbutyl (50%), n-Pentyl (50 %)) | | | | 12,5 | | |
| 3Mb-DPCD (3Mb: 3-Methylbutyl) | | | | | 12,5 | |
| 2Mb-DPCD (2Mb: 2-Metylbutyl) | | | | | | 12,5 |
| epoxidiertes Sojabohnenöl als Co-Stabilisator (Edenol^{®} D81, Fa. Emery) | 3 | 3 | 3 | 3 | 3 | 3 |
| Thermostabilisator auf Ca/Zn-Basis (Reagens MBL 197/9 PF) | 2 | 2 | 2 | 2 | 2 | 2 |

| | | | | | | |
|---|---|---|---|---|---|---|
| * = erfindungsgemäße Zusammensetzung phr = parts per hundred parts resin | | | | | | |

**Tabelle 3: Übersicht über die hergestellten Plastisole mit DINCH im Verhältnis 1:1.**

| Plastisol | 7 | 8* | 9* | 10* | 11* | 12* |
|---|---|---|---|---|---|---|
| | phr | phr | phr | phr | phr | phr |
| PVC (Vestolit^{®} P 1430 K 70 Ultra; Fa. Vestolit) | 100 | 100 | 100 | 100 | 100 | 100 |
| ELATUR^{®} CH, (Di-isononyl-1,2-cyclohexanoat, Fa. Evonik Oxeno & Co. KG) | 25 | 25 | 25 | 25 | 25 | 25 |
| ELATUR^{®} DPT, (Diisopentylterephthalat, Fa. Evonik Oxeno & Co. KG) | 25 | | | | | |
| Pe-DPCD (n-Pentyl, DPCD: Di-isopentyl-1,4-cyclohexanoat) | | 25 | | | | |
| 2MbPe-DPCD (7:93) (2Mb: 2-Methylbutyl (7%), n-Pentyl (93 %)) | | | 25 | | | |
| 2MbPe-DPCD (50:50) (2Mb: 2-Methylbutyl (50%), n-Pentyl (50 %)) | | | | 25 | | |
| 3Mb-DPCD (3Mb: 3-Methylbutyl) | | | | | 25 | |
| 2Mb-DPCD (2Mb: 2-Metylbutyl) | | | | | | 25 |
| epoxidiertes Sojabohnenöl als Co-Stabilisator (Edenol^{®} D81, Fa. Emery) | 3 | 3 | 3 | 3 | 3 | 3 |
| Thermostabilisator auf Ca/Zn-Basis (Reagens MBL 197/9 PF) | 2 | 2 | 2 | 2 | 2 | 2 |

| | | | | | | |
|---|---|---|---|---|---|---|
| * = erfindungsgemäße Zusammensetzung phr = parts per hundred parts resin | | | | | | |

**Tabelle 4: Übersicht über die hergestellten Plastisole mit DINCH im Verhältnis 1:3.**

| Plastisol | 13 | 14* | 15* | 16* | 17* | 18* |
|---|---|---|---|---|---|---|
| | phr | phr | phr | phr | phr | phr |
| PVC (Vestolit^{®} P 1430 K 70 Ultra; Fa. Vestolit) | 100 | 100 | 100 | 100 | 100 | 100 |
| ELATUR^{®} CH, (Di-isononyl-1,2-cyclohexanoat, Fa. Evonik Oxeno & Co. KG) | 12,5 | 12,5 | 12,5 | 12,5 | 12,5 | 12,5 |
| ELATUR^{®} DPT, (Diisopentylterephthalat, Fa. Evonik Oxeno & Co. KG) | 37,5 | | | | | |
| Pe-DPCD (n-Pentyl, DPCD: Di-isopentyl-1,4-cyclohexanoat) | | 37,5 | | | | |
| 2MbPe-DPCD (7:93) (2Mb: 2-Methylbutyl (7%), n-Pentyl (93 %)) | | | 37,5 | | | |
| 2MbPe-DPCD (50:50) (2Mb: 2-Methylbutyl (50%), n-Pentyl (50 %)) | | | | 37,5 | | |
| 3Mb-DPCD (3Mb: 3-Methylbutyl) | | | | | 37,5 | |
| 2Mb-DPCD (2Mb: 2-Metylbutyl) | | | | | | 37,5 |
| epoxidiertes Sojabohnenöl als Co-Stabilisator (Edenol^{®} D81, Fa. Emery) | 3 | 3 | 3 | 3 | 3 | 3 |
| Thermostabilisator auf Ca/Zn-Basis (Reagens MBL 197/9 PF) | 2 | 2 | 2 | 2 | 2 | 2 |

| | | | | | | |
|---|---|---|---|---|---|---|
| * = erfindungsgemäße Zusammensetzung phr = parts per hundred parts resin | | | | | | |

**Tabelle 5: Übersicht über die hergestellten Plastisole mit DINCD im Verhältnis 3:1.**

| Plastisol | 19 | 20* | 21* | 22* | 23* | 24* |
|---|---|---|---|---|---|---|
| | phr | phr | phr | phr | phr | phr |
| PVC (Vestolit^{®} P 1430 K 70 Ultra; Fa. Vestolit) | 100 | 100 | 100 | 100 | 100 | 100 |
| ELATUR^{®} DINCD, (Di-isononyl-1,4-cyclohexanoat, Fa. Evonik Oxeno & Co. KG) | 37,5 | 37,5 | 37,5 | 37,5 | 37,5 | 37,5 |
| ELATUR^{®} DPT, (Diisopentylterephthalat, Fa. Evonik Oxeno & Co. KG) | 12,5 | | | | | |
| Pe-DPCD (n-Penyl, DPCD: Di-isopentyl-1,4-cyclohexanoat) | | 12,5 | | | | |
| 2MbPe-DPCD (7:93) (2Mb: 2-Methylbutyl (7%), n-Pentyl (93 %)) | | | 12,5 | | | |
| 2MbPe-DPCD (50:50) (2Mb: 2-Methylbutyl (50%), n-Pentyl (50 %)) | | | | 12,5 | | |
| 3Mb-DPCD (3Mb: 3-Methylbutyl) | | | | | 12,5 | |
| 2Mb-DPCD (2Mb: 2-Metylbutyl) | | | | | | 12,5 |
| epoxidiertes Sojabohnenöl als Co-Stabilisator (Edenol^{®} D81, Fa. Emery) | 3 | 3 | 3 | 3 | 3 | 3 |
| Thermostabilisator auf Ca/Zn-Basis (Reagens MBL 197/9 PF) | 2 | 2 | 2 | 2 | 2 | 2 |

| | | | | | | |
|---|---|---|---|---|---|---|
| * = erfindungsgemäße Zusammensetzung phr = parts per hundred parts resin | | | | | | |

**Tabelle 6: Übersicht über die hergestellten Plastisole mit DINCD im Verhältnis 1:1.**

| Plastisol | 25 | 26* | 27* | 28* | 29* | 30* |
|---|---|---|---|---|---|---|
| | phr | phr | phr | phr | phr | phr |
| PVC (Vestolit^{®} P 1430 K 70 Ultra; Fa. Vestolit) | 100 | 100 | 100 | 100 | 100 | 100 |
| ELATUR^{®} DINCD, (Di-isononyl-1,4-cyclohexanoat, Fa. Evonik Oxeno & Co. KG) | 25 | 25 | 25 | 25 | 25 | 25 |
| ELATUR^{®} DPT, (Diisopentylterephthalat, Fa. Evonik Oxeno & Co. KG) | 25 | | | | | |
| Pe-DPCD (n-Penyl, DPCD: Di-isopentyl-1,4-cyclohexanoat) | | 25 | | | | |
| 2MbPe-DPCD (7:93) (2Mb: 2-Methylbutyl (7%), n-Pentyl (93 %)) | | | 25 | | | |
| 2MbPe-DPCD (50:50) (2Mb: 2-Methylbutyl (50%), n-Pentyl (50 %)) | | | | 25 | | |
| 3Mb-DPCD (3Mb: 3-Methylbutyl) | | | | | 25 | |
| 2Mb-DPCD (2Mb: 2-Metylbutyl) | | | | | | 25 |
| epoxidiertes Sojabohnenöl als Co-Stabilisator (Edenol^{®} D81, Fa. Emery) | 3 | 3 | 3 | 3 | 3 | 3 |
| Thermostabilisator auf Ca/Zn-Basis (Reagens MBL 197/9 PF) | 2 | 2 | 2 | 2 | 2 | 2 |

| | | | | | | |
|---|---|---|---|---|---|---|
| * = erfindungsgemäße Zusammensetzung phr = parts per hundred parts resin | | | | | | |

**Tabelle 7: Übersicht über die hergestellten Plastisole mit DINCD im Verhältnis 1:3.**

| Plastisol | 31 | 32* | 33* | 34* | 35* | 36* |
|---|---|---|---|---|---|---|
| | phr | phr | phr | phr | phr | phr |
| PVC (Vestolit^{®} P 1430 K 70 Ultra; Fa. Vestolit) | 100 | 100 | 100 | 100 | 100 | 100 |
| ELATUR^{®} DINCD, (Di-isononyl-1,4-cyclohexanoat, Fa. Evonik Oxeno & Co. KG) | 12,5 | 12,5 | 12,5 | 12,5 | 12,5 | 12,5 |
| ELATUR^{®} DPT, (Diisopentylterephthalat, Fa. Evonik Oxeno & Co. KG) | 37,5 | | | | | |
| Pe-DPCD (n-Pentyl, DPCD: Di-isopentyl-1,4-cyclohexanoat) | | 37,5 | | | | |
| 2MbPe-DPCD (7:93) (2Mb: 2-Methylbutyl (7%), n-Pentyl (93 %)) | | | 37,5 | | | |
| 2MbPe-DPCD (50:50) (2Mb: 2-Methylbutyl (50%), n-Pentyl (50 %)) | | | | 37,5 | | |
| 3Mb-DPCD (3Mb: 3-Methylbutyl) | | | | | 37,5 | |
| 2Mb-DPCD (2Mb: 2-Metylbutyl) | | | | | | 37,5 |
| epoxidiertes Sojabohnenöl als Co-Stabilisator (Edenol^{®} D81, Fa. Emery) | 3 | 3 | 3 | 3 | 3 | 3 |
| Thermostabilisator auf Ca/Zn-Basis (Reagens MBL 197/9 PF) | 2 | 2 | 2 | 2 | 2 | 2 |

| | | | | | | |
|---|---|---|---|---|---|---|
| * = erfindungsgemäße Zusammensetzung phr = parts per hundred parts resin | | | | | | |

Zuerst wurden die flüssigen und dann die pulverförmigen Bestandteile in einen PE-Becher eingewogen. Von Hand wurde die Mischung mit einem Spatel so eingerührt, dass kein unbenetztes Pulver mehr vorhanden war. Der verschlossene Becher wurde in die im Speedmixer befindliche Halterung gestellt und vermischt sowie entlüftet. Nach Beenden der Vermischung wurde die Temperatur des Plastisols mit Hilfe eines IR-Thermometers gemessen. Danach wurde das Plastisol sofort für weitere Untersuchungen in einem Klimaschrank bei 25,0 °C temperiert.

### Beispiel 3 - Gelierung der Plastisole

Die Untersuchung des Gelierverhaltens der Plastisole aus Beispiel 2 wurde mittels Physica MCR 101 im Oszillationsmodus mit einem Platte-Platte Messsystem (PP25), welches schubspannungsgesteuert betrieben wurde, vorgenommen. Eine zusätzliche Temperierhaube wurde an das Gerät angeschlossen, um eine homogene Wärmeverteilung und eine gleichmäßige Probentemperatur zu erreichen.

### Folgende Parameter wurden eingestellt:

| | |
|---|---|
| Modus: | Temperatur-Gradient |
| Start-Temperatur: | 25 °C |
| End-Temperatur: | 180 °C |
| Heiz/Kühlrate: | 5 °C/min |
| Oszillations-Frequenz: | 4 bis 0,1 Hz Rampe logarithmisch |
| Kreisfrequenz Omega: | 10 s⁻¹ |
| Anzahl Messpunkte: | 63 |
| Messpunktdauer: | 0,5 min |
| Automatische Spaltnachführung F: | 0 N |
| Konstante Messpunktdauer Spaltweite | 0,5 mm |

### Durchführung der Messung

Auf die untere Messsystemplatte wurden mit dem Spatel einige Gramm der zu messenden Paste luftblasenfrei aufgetragen. Dabei wurde darauf geachtet, dass nach dem Zusammenfahren des Messsystems etwas Paste gleichmäßig aus dem Messsystem herausquellen konnte (nicht mehr als 6 mm rundum). Der Überschuss wurde mittels Spatel entfernt. Anschließend wurde die Temperierhaube über der Probe positioniert und die Messung gestartet. Bestimmt wurde die komplexe Viskosität der Paste nach 24 Stunden (Lagerung der Paste bei 25 °C in einem Temperierschrank der Fa. Memmert) in Abhängigkeit von der Temperatur.

Als Maß für die Gelierung wurde ein deutlicher Anstieg der komplexen Viskosität betrachtet. Als Vergleichswert wurde daher die Geliertemperatur bei Erreichen einer Pastenviskosität von 1000 Pa*s verwendet. Die erhaltenen Ergebnisse sind in Tabelle 8 und 9 aufgeführt.

**Tabelle 8: Gelierung der Plastisole mit DINCH nach 24 Stunden, Temperatur in °C bei Erreichen einer Pastenviskosität von 1000 Pa*s.**

| Rezeptur | Weichmacherzusammensetzung nach Tabellen 1 bis 3 | Geliertemperatur [°C] |
|---|---|---|
| | | |
| 1 | DINCH/DPT (3:1) | 79,6 |
| 2* | DINCH/Pe-DPCD (3:1) | 77,7 |
| 3* | DINCH/2MBPe-DPCD (7:93) (3:1) | 77,8 |
| 4* | DINCH/2MBPe-DPCD (50:50) (3:1) | 78,1 |
| 5* | DINCH/3Mb-DPCD (3:1) | 79,8 |
| 6* | DINCH/2Mb-DPCD (3:1) | 78,5 |
| | | |
| 7 | DINCH/DPT (1:1) | 74,9 |
| 8* | DINCH/Pe-DPCD (1:1) | 71,7 |
| 9* | DINCH/2MBPe-DPCD (7:93) (1:1) | 72,6 |
| 10* | DINCH/2MBPe-DPCD (50:50) (1:1) | 72,3 |
| 11* | DINCH/3Mb-DPCD (1:1) | 75,3 |
| 12* | DINCH/2Mb-DPCD (1:1) | 73,0 |
| | | |
| 13 | DINCH/DPT (1:3) | 70,5 |
| 14* | DINCH/Pe-DPCD (1:3) | 66,2 |
| 15* | DINCH/2MbPe-DPCD (7:93) (1:3) | 66,4 |
| 16* | DINCH/2MbPe-DPCD (50:50) (1:3) | 67,3 |
| 17* | DINCH/3Mb-DPCD (1:3) | 70,9 |
| 18* | DINCH/2Mb-DPCD (1:3) | 68,3 |

| | | |
|---|---|---|
| * Versuch mit erfindungsgemäßer Weichmacherzusammensetzung | | |

**Tabelle 9: Gelierung der Plastisole mit DINCD nach 24 Stunden, Temperatur in °C bei Erreichen einer Pastenviskosität von 1000 Pa*s.**

| Rezeptur | Weichmacherzusammensetzung nach Tabellen 4 bis 6 | Geliertemperatur [°C] |
|---|---|---|
| | | |
| 19 | DINCD/DPT (3:1) | 78,5 |
| 20* | DINCD/Pe-DPCD (3:1) | 77,1 |
| 21* | DINCD/2MbPe-DPCD (7:93) (3:1) | 77,0 |
| 22* | DINCD/2MbPe-DPCD (50:50) (3:1) | 79,4 |
| 23* | DINCD/3Mb-DPCD (3:1) | 80,7 |
| 24* | DINCD/2Mb-DPCD (3:1) | 78,0 |
| | | |
| 25 | DINCD/DPT (1:1) | 74,7 |
| 26* | DINCD/Pe-DPCD (1:1) | 71,0 |
| 27* | DINCD/2MbPe-DPCD (7:93) (1:1) | 71,1 |
| 28* | DINCD/2MbPe-DPCD (50:50) (1:1) | 72,2 |
| 29* | DINCD/3Mb-DPCD (1:1) | 74,8 |
| 30* | DINCD/2Mb-DPCD (1:1) | 72,7 |
| | | |
| 31 | DINCD/DPT (1:3) | 70,4 |
| 32* | DINCD/Pe-DPCD (1:3) | 65,9 |
| 33* | DINCD/2MbPe-DPCD (7:93) (1:3) | 66,0 |
| 34* | DINCD/2MbPe-DPCD (50:50) (1:3) | 67,4 |
| 35* | DINCD/3Mb-DPCD (1:3) | 70,8 |
| 36* | DINCD/2Mb-DPCD (1:3) | 69,9 |

| | | |
|---|---|---|
| * Versuch mit erfindungsgemäßer Weichmacherzusammensetzung | | |

Im Vergleich mit Dipentylterephthalat sorgt der Einsatz von Pe-DPCD, 2Mb-DPCD und den beiden 2MbPe-DPCD in den Weichmacherzusammensetzungen für eine deutliche Reduktion der Geliertemperatur. Wird mehr DPCD eingesetzt, kann die Geliertemperatur weiter gesenkt werden.

### Beispiel 4 - Pastenviskositäten

Die Messung der Viskosität der in Beispiel 2 hergestellten Plastisole wurde mit einem Rheometer Physica MCR 101 (Firma Anton Paar Germany GmbH) mit Hilfe der zugehörigen Software durchgeführt, wobei der Rotationsmodus und das Messsystem CC27 verwendet wurden.

Während der Messung wurden folgende Punkte angesteuert:
- Vorscherung von 100 s⁻¹ für einen Zeitraum von 60 Sekunden, bei der keine Messwerte aufgenommen wurden.
- Scherraten-Abwärtsrampe von 200 s⁻¹ bis 0,1 s⁻¹. Es wurden 30 Messpunkte aufgenommen mit einer Messpunktdauer von je 10 Sekunden.

Die Messungen wurden bei Raumtemperatur durchgeführt. Die Ergebnisse der Viskositätsmessungen der in Beispiel 2 hergestellten Plastisole mit den jeweils angegebenen Weichmachern bzw. Weichmachermischungen sind in Tabelle 10 und 11 gezeigt.

**Tabelle 10: Pastenviskositäten von Zusammensetzungen mit DINCH bei 200 1/s.**

| Rezeptur | Weichmacherzusammensetzung nach Tabellen 1 bis 3 | Pastenviskosität nach 2 Stunden bei 200 s⁻¹ / Pa*s | Pastenviskosität nach 24 Stunden bei 200 s⁻¹ / Pa*s |
|---|---|---|---|
| 1 | DINCH/DPT (3:1) | 4,60 | 4,30 |
| 2* | DINCH/Pe-DPCD (3:1) | 2,93 | 3,15 |
| 3* | DINCH/2MbPe-DPCD (7:93) (3:1) | 2,95 | 3,19 |
| 4* | DINCH/2MbPe-DPCD (50:50) (3:1) | 3,19 | 3,40 |
| 5* | DINCH/3Mb-DPCD (3:1) | 3,54 | 3,40 |
| 6* | DINCH/2Mb-DPCD (3:1) | 3,53 | 3,61 |
| | | | |
| 7 | DINCH/DPT (1:1) | 4,55 | 4,66 |
| 8* | DINCH/Pe-DPCD (1:1) | 2,41 | 2,98 |
| 9* | DINCH/2MbPe-DPCD (7:93) (1:1) | 1,86 | 2,44 |
| 10* | DINCH/2MbPe-DPCD (50:50) (1:1) | 2,81 | 3,35 |
| 11* | DINCH/3Mb-DPCD (1:1) | 2,96 | 3,21 |
| 12* | DINCH/2Mb-DPCD (1:1) | 3,17 | 3,67 |
| | | | |
| 13 | DINCH/DPT (1:3) | 4,29 | 4,98 |
| 14* | DINCH/Pe-DPCD (1:3) | 2,37 | 3,39 |
| 15* | DINCH/2MbPe-DPCD (7:93) (1:3) | 2,40 | 3,46 |
| 16* | DINCH/2MbPe-DPCD (50:50) (1:3) | 2,71 | 3,72 |
| 17* | DINCH/3Mb-DPCD (1:3) | 2,48 | 2,94 |
| 18* | DINCH/2Mb-DPCD (1:3) | 3,07 | 4,04 |

| | | | |
|---|---|---|---|
| * Versuch mit erfindungsgemäßer Weichmacherzusammensetzung | | | |

**Tabelle 11: Pastenviskositäten von Zusammensetzungen mit DINCD bei 200 1/s.**

| Rezeptur | Weichmacherzusammensetzung nach Tabellen 4 bis 6 | Pastenviskosität nach 2 Stunden bei 200 s⁻¹ / Pa*s | Pastenviskosität nach 24 Stunden bei 200 s⁻¹ / Pa*s |
|---|---|---|---|
| 19 | DINCD/DPT (3:1) | 4,20 | 3,94 |
| 20* | DINCD/Pe-DPCD (3:1) | 2,80 | 3,05 |
| 21* | DINCD/2MbPe-DPCD (7:93) (3:1) | 2,72 | 3,03 |
| 22* | DINCD/2MbPe-DPCD (50:50) (3:1) | 3,05 | 3,25 |
| 23* | DINCD/3Mb-DPCD (3:1) | 3,27 | 3,28 |
| 24* | DINCD/2Mb-DPCD (3:1) | 3,49 | 3,49 |
| | | | |
| 25 | DINCD/DPT (1:1) | 4,16 | 4,33 |
| 26* | DINCD/Pe-DPCD (1:1) | 2,48 | 3,03 |
| 27* | DINCD/2MbPe-DPCD (7:93) (1:1) | 2,46 | 3,02 |
| 28* | DINCD/2MbPe-DPCD (50:50) (1:1) | 2,76 | 3,24 |
| 29* | DINCD/3Mb-DPCD (1:1) | 2,86 | 3,11 |
| 30* | DINCD/2Mb-DPCD (1:1) | 3,07 | 3,55 |
| | | | |
| 31 | DINCD/DPT (1:3) | 4,37 | 4,84 |
| 32* | DINCD/Pe-DPCD (1:3) | 2,52 | 3,48 |
| 33* | DINCD/2MbPe-DPCD (7:93) (1:3) | 2,47 | 3,45 |
| 34* | DINCD/2MbPe-DPCD (50:50) (1:3) | 2,66 | 3,58 |
| 35* | DINCD/3Mb-DPCD (1:3) | 2,58 | 2,97 |
| 36* | DINCD/2Mb-DPCD (1:3) | 3,03 | 4,03 |

| | | | |
|---|---|---|---|
| * Versuch mit erfindungsgemäßer Weichmacherzusammensetzung | | | |

Gegenüber Abmischungen mit DPT zeigen die erfindungsgemäßen Gemische eine verringerte Pastenviskosität.

### Beispiel 5 - Herstellung von Folien

Die im Beispiel 2 hergestellten Plastisole wurden jeweils zu 1 mm dicken Folien verarbeitet. Dazu wurde zunächst Hochglanztrennpapier (Fa. Sappi, Italien) auf eine Größe von 30 x 44 cm zugeschnitten und im Spannrahmen der Streicheinrichtung LTSV für den Mathis-Ofen eingelegt. Danach wurde der Spannrahmen auf den Führungsrahmen aufgelegt, der Mathis-Ofen (Typ LTF) auf 200 °C eingestellt und der Rahmen nach Erreichen dieser Temperatur 15 Sekunden vorgewärmt. Danach wurde die Rakel in die Einspannvorrichtung gelegt und der Rakelspalt über Vorversuche so eingestellt, dass die Foliendicke nach Abschluss der Gelierung 1 mm (+/- 0,05 mm) betrug. Auf den vorderen Rand des Papiers wurde ein Klebestreifen angebracht, um überschüssiges Plastisol aufzufangen. Danach wurde das Plastisol vor der Rakel aufgetragen und diese durch Ziehen des Führungsrahmens mit der Rakel über das eingespannte Trennpapier verstrichen (3 m/min Geschwindigkeit). Danach wurde die Rakel herausgenommen und der Klebestreifen mit dem überschüssigen Plastisol abgenommen. Anschließend wurde der Spannrahmen in den Ofen eingefahren. Nach der Gelierung (2 Minuten bei 200 °C) wurde der Rahmen wieder aus dem Ofen herausgefahren und nach Abkühlen die Folie von dem Papier abgezogen.

### Beispiel 6 - Bestimmung der Shore A Härte

Aus den nach Beispiel 5 hergestellten Folien wurden 4,8 x 4,8 cm² große Stücke geschnitten. Diese wurden in einen Pressrahmen zu 6-8 Lagen, je nach Folienstärke, gestapelt und bei 170 °C und 200 bar verpresst. Hiernach wurden die Prüfkörper für mind. 16 h im Klimaraum unter Normklima (25°C, 50 % Raumfeuchte) konditioniert und anschließend in Anlehnung an DIN 48-4 mit einem Shore-A-Messgerät der Fa. Zwick-Roell vermessen. Dabei wurden die Messwerte nach 3 Sekunden abgelesen. An jedem Prüfkörper wurden Messungen an drei verschiedenen Stellen durchgeführt und der Mittelwert gebildet. Die Ergebnisse sind in Tabelle 12 und 13 aufgeführt.

**Tabelle 12: Shore A Härten der gepressten Prüfkörper von Zusammensetzungen mit DINCH.**

| Rezeptur | Weichmacherzusammensetzung nach Tabelle 1 bis 3 | Shore A |
|---|---|---|
| 1 | DINCH/DPT (3:1) | 82 |
| 2* | DINCH/Pe-DPCD (3:1) | 80 |
| 3* | DINCH/2MbPe-DPCD (7:93) (3:1) | 80 |
| 4* | DINCH/2MbPe-DPCD (50:50) (3:1) | 80 |
| 5* | DINCH/3Mb-DPCD (3:1) | 81 |
| 6* | DINCH/2Mb-DPCD (3:1) | 81 |
| | | |
| 7 | DINCH/DPT (1:1) | 80 |
| 8* | DINCH/Pe-DPCD (1:1) | 77 |
| 9* | DINCH/2MbPe-DPCD (7:93) (1:1) | 75 |
| 10* | DINCH/2MbPe-DPCD (50:50) (1:1) | 78 |
| 11* | DINCH/3Mb-DPCD (1:1) | 80 |
| 12* | DINCH/2Mb-DPCD (1:1) | 78 |
| | | |
| 13 | DINCH/DPT (1:3) | 78 |
| 14* | DINCH/Pe-DPCD (1:3) | 75 |
| 15* | DINCH/2MbPe-DPCD (7:93) (1:3) | 75 |
| 16* | DINCH/2MbPe-DPCD (50:50) (1:3) | 75 |
| 17* | DINCH/3Mb-DPCD (1:3) | 78 |
| 18* | DINCH/2Mb-DPCD (1:3) | 76 |

| | | |
|---|---|---|
| * = erfindungsgemäße Zusammensetzung | | |

**Tabelle 13: Shore A Härten der gepressten Prüfkörper von Zusammensetzungen mit DINCD.**

| Rezeptur | Weichmacherzusammensetzung nach Tabellen 4 bis 6 | Shore A |
|---|---|---|
| 19 | DINCD/DPT (3:1) | 81 |
| 20* | DINCD/Pe-DPCD (3:1) | 80 |
| 21* | DINCD/2MbPe-DPCD (7:93) (3:1) | 80 |
| 22* | DINCD/2MbPe-DPCD (50:50) (3:1) | 80 |
| 23* | DINCD/3Mb-DPCD (3:1) | 81 |
| 24* | DINCD/2Mb-DPCD (3:1) | 80 |
| | | |
| 25 | DINCD/DPT (1:1) | 79 |
| 26* | DINCD/Pe-DPCD (1:1) | 77 |
| 27* | DINCD/2MbPe-DPCD (7:93) (1:1) | 77 |
| 28* | DINCD/2MbPe-DPCD (50:50) (1:1) | 77 |
| 29* | DINCD/3Mb-DPCD (1:1) | 79 |
| 30* | DINCD/2Mb-DPCD (1:1) | 78 |
| | | |
| 31 | DINCD/DPT (1:3) | 77 |
| 32* | DINCD/Pe-DPCD (1:3) | 75 |
| 33* | DINCD/2MbPe-DPCD (7:93) (1:3) | 75 |
| 34* | DINCD/2MbPe-DPCD (50:50) (1:3) | 74 |
| 35* | DINCD/3Mb-DPCD (1:3) | 77 |
| 36* | DINCD/2Mb-DPCD (1:3) | 76 |

| | | |
|---|---|---|
| * = erfindungsgemäße Zusammensetzung | | |

Die erfindungsgemäßen Zusammensetzungen zeigen überwiegend eine Verbesserung in der weichmachenden Wirkung (Effizienz).

Die Mischungen mit dem reinen 3-Methylbutylester der 1,4-Cyclohexandicarbonsäure (Rezepturen 5, 11, 17, 23, 29, 35) zeigen gegenüber den Vergleichsbeispielen mit ELATUR^{®} DPT jeweils eine deutlich erniedrigte Viskosität im Plastisol und eine vergleichbare Effizienz (Shore-A). Dies kann in bestimmten Anwendungsfällen (zum Beispiel Streichverfahren) die nur unwesentlich geringere Gelierfähigkeit überkompensieren.

## Patentansprüche

1. Weichmacherzusammensetzung enthaltend eine Verbindung der Formel (1) 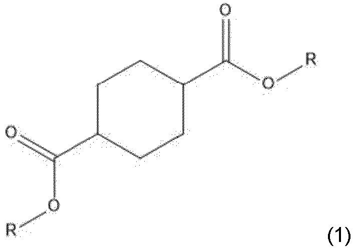 bei denen die beiden Alkylgruppen R jeweils 5 Kohlenstoffatome aufweisen, vorzugsweise jeweils aus einer 2-Methylbutylgruppe und einer n-Pentylgruppe ausgewählt werden, und mindestens einen 1,2- oder 1,4-Dialkylcyclohexandicarbonsäureester, wobei die beiden Alkylgruppen des 1,2- oder 1,4-Dialkylcyclohexandicarbonsäureester jeweils 8, 9 oder 10 Kohlenstoffatome aufweisen.

2. Weichmacherzusammensetzung nach Anspruch 1, wobei die beiden Alkylgruppen des 1,2- oder 1,4-Dialkylcyclohexandicarbonsäureester jeweils unabhängig voneinander aus der Gruppe, bestehend aus einer normalen Octylgruppe, einer Isooctylgruppe, einer 2-Ethylhexylgruppe, einer normalen Nonylgruppe, einer Isononylgruppe, einer n-Decylgruppe, einer Isodecylgruppe und einer 2-Propylheptylgruppe ausgewählt werden.

3. Weichmacherzusammensetzung nach Anspruch 1 oder 2, wobei die beiden Alkylgruppen des 1,2- oder 1,4-Dialkylcyclohexandicarbonsäureesters die gleiche Anzahl an Kohlenstoffatomen aufweisen.

4. Weichmacherzusammensetzung nach einem der vorhergehenden Ansprüche, wobei der 1,4-Dialkylcyclohexandicarbonsäureester der 1,4-Di-isononyl-cyclohexandicarbonsäureester (1,4-DINCH bzw. DINCD) oder der 1,4- Di-2-ethylhexylcyclohexandicarbonsäureester (1,4-DEHCH) und/oder der 1,2-Dialkylcyclohexandicarbonsäureester der 1,2-Di-isononyl-cyclohexandicarbonsäureester (DINCH) oder der 1,2-Di-2-ethylhexylcyclohexandicarbonsäureester (DEHCH) ist.

5. Weichmacherzusammensetzung nach einem der vorhergehenden Ansprüche, wobei die Verbindung nach Formel (1) und der 1,2- oder 1,4-Dialkylcyclohexandicarbonsäureester in einem Gewichtsverhältnis (Verbindung nach Formel (1) : 1,2- oder 1,4-Dialkylcyclohexandicarbonsäureester) von 1 : 99 bis 99 : 1, vorzugsweise 10 : 90 bis 90 : 10, besonders bevorzugt 30 : 70 bis 70 : 30 in der Weichmacherzusammensetzung vorhanden sind.

6. Weichmacherzusammensetzung nach einem der vorhergehenden Ansprüche, wobei die Weichmacherzusammensetzung zusätzlich ein epoxidiertes Öl oder einen epoxidierten Alkylester einer Fettsäure enthält.

7. Weichmacherzusammensetzung nach Anspruch 6, wobei das epoxidierte Öl aus der Gruppe bestehend aus epoxidiertem Sojabohnenöl, epoxidiertem Rizinusöl, epoxidiertem Leinöl, epoxidiertem Palmöl, epoxidiertem Stearat, epoxidiertem Oleat, epoxidiertem Tallöl, epoxidiertem Linoleat und Mischungen davon ausgewählt wird.

8. Weichmacherzusammensetzung nach Anspruch 7, wobei das epoxidierte Öl epoxidiertes Sojabohnenöl oder epoxidiertes Leinöl, vorzugsweise epoxidiertes Sojabohnenöl ist.

9. Weichmacherzusammensetzung nach einem der Ansprüche 6 bis 8, wobei das epoxidierte Öl in einer Menge von 1 bis 150 Gewichtsteilen bezogen auf 100 Gewichtsteile der Gesamtsumme aus der Verbindung gemäß Formel (1) und dem 1,2- oder 1,4-Dialkylcyclohexandicarbonsäureester in der Weichmacherzusammensetzung vorhanden ist.

10. Weichmacherzusammensetzung nach einem der vorherigen Ansprüche, wobei die Weichmacherzusammensetzung Mischester der Verbindung der Formel (1) umfasst, wobei mindestens 40% der Pentylreste, vorzugsweise mindestens 50 % der Pentylreste, besonders bevorzugt mindestens 90% der Pentylreste im Mischester n-Pentylreste sind.

11. Kunststoffzusammensetzung, umfassend die Weichmacherzusammensetzung nach einem der Ansprüche 1 bis 10 und einen Kunststoff.

12. Kunststoffzusammensetzung nach Anspruch 11, wobei der Anteil der Weichmacherzusammensetzung 5 bis 150 Gewichtsteile pro 100 Gewichtsteile Kunststoff beträgt.

13. Kunststoffzusammensetzung nach Anspruch 11 oder 12, wobei der Kunststoff ein Polymer aus der Gruppe, bestehend aus Polyvinylchlorid (PVC), Polyalkylmethacrylat (PAMA), Polyvinylbutyral (PVB), Polyurethan, Polysulfide, Polymilchsäure (PLA), Polyhydroxybutyral (PHB), Nitrocellulose und Co-Polymeren von Vinylchlorid mit Vinylacetat oder mit Butylacrylat, ausgewählt wird.

14. Kunststoffzusammensetzung nach Anspruch 13, wobei der Kunststoff Polyvinylchlorid (PVC) ist.

15. Verwendung der Kunststoffzusammensetzung nach einem der Ansprüche 11 bis 13 in Klebstoffen, Dichtungsmassen, Beschichtungsmassen, Lacken, Farben, Plastisolen, Schäumen, Kunstleder, Fußbodenbelägen, insbesondere Deck- und Schaumschicht, Dachbahnen, Unterbodenschutz, Gewebebeschichtungen, Kabeln, Drahtisolierungen, Schläuchen, Extrusionsartikeln, Folien, im Automobilinnenbereich, in Tapeten, Tinten, Spielzeug, Kontaktfolien, Lebensmittelverpackungen oder medizinischen Artikeln, insbesondere in Schläuchen oder Blutbeuteln.
